# EUROPÄISCHE PATENTANMELDUNG

(11) **EP 2 345 530 A1**
(43) Veröffentlichungstag der Anmeldung: **20.07.2011**
(21) Anmeldenummer: 10196832.9
(22) Anmeldetag: 23.12.2010
(51) Int. Cl.: B29C 70/38, B29C 41/08, B29C 41/36

(54) **Vorrichtung und Verfahren zum direkten Faserbandsprühen**

(30) Priorität: 15.01.2010 DE 102010004678
(71) Anmelder: KraussMaffei Technologies GmbH, 80997 München (DE)
(72) Erfinder: Pump, Thomas, 80999 München (DE); Renkl, Josef, 85229 Markt Indersdorf (DE)
(74) Vertreter: Wilhelm, Ludwig

(57) **Zusammenfassung**

Die vorliegende Erfindung betrifft eine Vorrichtung und ein Verfahren zum Herstellen eines Compositbauteils aus einem beschichteten Faserverstärkungsmaterial umfassend eine Bewegungsvorrichtung, eine Faserzuführvorrichtung mit einen Vorratsbehälter (18) für ein Faserband (20), einem Faserbandvorschub, eine Faserbandführungseinrichtung mit einem Auslass und einem Faserbandschneidwerk (22) sowie zumindest einer Aufbringeinrichtung (26) für ein Kunststoffmaterial, wobei die Ausbringbreite im wesentlichen der Breite des Faserbandes entspricht.

## Beschreibung

Die vorliegende Erfindung betrifft eine Vorrichtung und ein Verfahren zum Faserbandsprühen und zur Herstellung eines Compositbauteils aus einem beschichteten Faserverstärkungsmaterial.

Insbesondere zur Verbesserung der mechanischen Eigenschaften ist es seit langem bekannt, Kunststoffbauteile mittels Fasern zu verstärken. Dabei gibt es sehr unterschiedliche Vorgehensweisen.

Bei der Herstellung eines Polyurethanmaterials ist es beispielsweise bekannt, Fasern mit einem Schneidwerk zu zerschneiden und in einen Strom aus einem reaktiven Materialgemisch einzubringen. Dieses mit Fasern versetzte Polyurethangemisch wird dann auf ein Bauteil auf- oder in ein Werkzeug auf die Kavitätsoberfläche eingebracht. Nachteilig bei dem Zerschneiden von Fasern ist eine Schwächung des Bauteils, was zu weniger guten mechanischen Eigenschaften des Bauteils führt; überdies kommt es durch den Scheide- und Transportvorgang zu einem Faserflug der die Umgebungsluft verunreinigt und zudem zu einer Verschmutzung von Anlagenteilen führen kann.

Eine andere Vorgehensweise der Herstellung von faserverstärkten Produkten ist dadurch gekennzeichnet, dass (zumeist beschnittene) Fasermatten auf ein Werkstück auf- oder in eine Form eingelegt werden und anschließend mit einem Kunststoffmaterial beschichtet werden. Solche Verfahren sind in letzter Zeit beispielsweise unter dem Namen "Baypreg-Technologie" bekannt geworden. Diesbezüglich wird beispielsweise auf die DE 10 2009 007 703 A1 verwiesen.

In der DE 10 2004 059 883 A1 ist ein Verfahren zur Herstellung eines harzgetränkten Faserschlauches zur Innenauskleidung von Kanälen oder Rohrleitungen durch Imprägnieren mit einen Reaktionsharz beschrieben, bei der das Imprägnieren durch Ziehen des Fasergebildes durch ein Bad, durch Aufsprühen oder Aufrakeln geschieht.

Die DE 30 40 838 C2 beschreibt ein Verfahren und eine Vorrichtung zum Herstellen von flächigen Bauteilen aus faserverstärkten Werkstoffen, bei dem bzw. der zwei Faserstränge durch ein Tränkbad geleitet, dadurch beschichtet und mittels eines oder mehrerer Ablageköpfe auf eine Bauteilform abgelegt werden.

In der WO 2005/077644 A2 ist eine Vorrichtung für das Ablegen einer Faserstruktur auf eine Form angegeben, bei der die Fasern einer Ablegevorrichtung zugeführt werden, in der sie vor dem Ausbringen mit einem Harz benetzt werden.

Aufgabe der vorliegenden Erfindung ist es, eine Vorrichtung und ein Verfahren zur Herstellung eines Compositbauteils aus einem beschichteten Fasermaterial anzugeben, das die oben genannten Nachteile vermeidet.

Diese Aufgabe wird vorrichtungsmäßig durch die im Anspruch 1 angegebenen Merkmale und verfahrensmäßig durch die im Anspruch 8 angegebenen Merkmale gelöst.

Gemäß einem Gedanken der vorliegenden Erfindung ist an einer Bewegungsvorrichtung, welche sich über ein Werkzeug hinweg oder an einem Werkstück entlang einer vorgegebenen Bahn bewegen lässt, eine Faserbandzuführvorrichtung sowie eine Aufbringeinrichtung für ein Kunststoffmaterial angeordnet. Die Faserbandzuführvorrichtung umfasst einen Vorratsbehälter für das aufzubringende, kontinuierliche Faserband, einen Faserbandvorschub, eine Faserbandführungseinrichtung mit einem Auslass und ein Faserbandschneidwerk. Die Ausbringeinrichtung für das Kunststoffmaterial (beispielsweise ein Polyurethan-Mischkopf) ist so ausgestaltet, dass die Ausbringbreite im Wesentlichen der Breite des Faserbandes entspricht.

Mit einer solchen Vorrichtung kann gemäß einer ersten Alternative in einem ersten Schritt eine erste Schicht auf ein Werkzeug oder Werkstück aufgetragen werden. In einem zweiten Schritt wird die gesamte Vorrichtung nochmals über das Werkzeug oder Werkstück verfahren und gleichzeitig das Faserband aufgelegt sowie nachfolgend mit der Aufbringeinrichtung ein Kunststoffmaterial in der Breite des Faserbandes auf dieses aufgebracht. Als Aufbringeinrichtung eignet sich beispielsweise ein Polyurethanmischkopf mit einer Sprühvorrichtung, deren Sprühbreite bzw. -kegel der Faserbandbreite entspricht. Für die Bewegungsvorrichtung eignet sich beispielsweise eine übliche Robotarmvorrichtung, die von ihrer Tragfähigkeit her zum Halten und Bewegen der oben genannten Einheiten ausgebildet und von ihrer Bewegungsfähigkeit die Erstreckung des Werkzeugs bzw. des Werkstücks abdecken können muss.

Die vorgenannte Vorgehensweise, der Beschichtung eines Werkzeugs oder Werkstücks in einem ersten Schritt und der nachfolgenden gleichzeitigen Aufbringung des Faserbandes wie auch der zweiten Kunststoffschicht ist allerdings nur dann möglich, wenn das zuerst aufgebrachte Material der ersten Materialschicht nur langsam ausreagiert. Immerhin muss mit der ersten Ausbringeinrichtung die Werkzeugoberfläche beispielsweise vollständig besprüht werden, bevor man zum Ausgangspunkt zurückkehrt.

Verwendet man ein schneller reagierendes Material für die erste Kunststoffschicht oder müssen große Werkzeuge oder Werkstücke beschichten werden, so ist es vorteilhaft, eine zweite Ausbringeinrichtung anzuordnen, die in der Beschichtungsrichtung gesehen vor dem Auslass der Faserbandführungseinrichtung angeordnet ist. In diesem Fall würde gemäß einer zweiten Alternative kurz vor dem Aufbringen des Faserbandes auf das Werkzeug oder Werkstück die erste Kunststoffschicht mit der zweiten Ausbringvorrichtung, beispielsweise eine zweiten Polyurethan-mischkopf, aufgebracht werden. Anschließend würde unmittelbar nachfolgend das Faserband aufgebracht und schließlich würde wieder unmittelbar danach die zweite Kunststoffschicht mittels der ersten Ausbringvorrichtung auf das Faserband aufgebracht werden. Die jeweilige Ausbringeinrichtung für das Kunststoffmaterial ist so ausgebildet, dass die Ausbringbreite im Wesentlichen der Faserbandbreite entspricht. Bei dieser Vorgehensweise ist sichergestellt, dass die beiden Beschichtungen oder Sprühschichten - beispielsweise eine Sperrschicht und eine Faserband-Durchtränkungsschicht - nass in nass ineinander übergehen. Damit ist eine gute Imprägnierung der Fasern und eine gute Verbindung zwischen den einzelnen Sprühschichten gewährleistet.

Erreicht die oben beschriebene Vorrichtung das Ende eines Werkstückes, so wird das Faserband mittels des Faserbandschneidwerks so durchtrennt, dass es im Wesentlichen mit dem Werkstück endet. Auch die Aufbringeinrichtungen zum Ausbringen der Kunststoffmaterialien werden so gesteuert, dass mit dem Ende des Werkstücks die jeweilige Ausbringung endet. Auf diese Weise kann ein Werkstück oder Werkzeug bahnweise wie oben beschrieben beschichtet werden.

Ist es nicht erforderlich, das Werkzeug oder das Werkstück vollflächig mit einer Verstärkung auszubilden, so ist es auch möglich, während des Abfahrens einer Bahn mit der Bewegungsvorrichtung das Faserbandschneidwerk zu betätigen und einen Bereich des Werkstücks oder Werkzeugs ohne Faserbandverstärkung, sondern nur mit Ausbringung der Kunststoffmaterialien zu überfahren. In diesem Bereich ist dann keine Faserverstärkung enthalten.

Die oben beschriebene Vorrichtung ist dabei vorzugsweise so auszubilden, dass bei dem Faserband Flächengewichte von bis zu 1000 g pro qm und Breiten von bis zu 1500 mm verarbeitbar sind.

Die vorliegende Erfindung wird nachfolgend anhand eines konkreten Ausführungsbeispiels und mit Bezug auf die einzige beigefügte Zeichnung näher beschrieben.

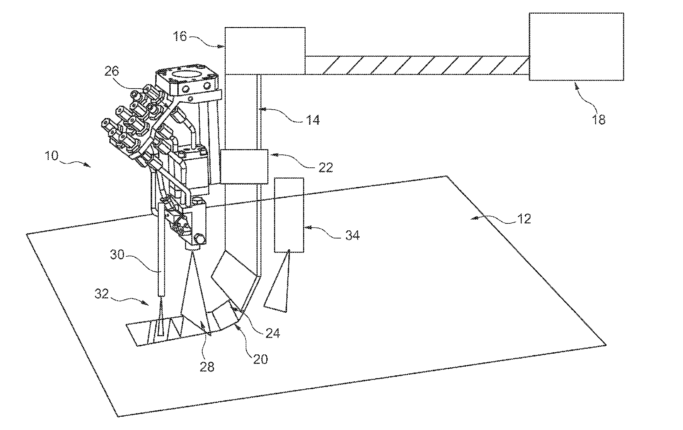

Die einzige Zeichnung zeigt in schematisch stark vereinfachter Darstellungsweise eine erfindungsgemäße Ausbringvorrichtung 10. In der Figur ist ein Werkstück 12 zu sehen, welches beispielsweise eine Papierwabenkonstruktion oder eine andere Platte (Werkstück) sein kann. Alternativ kann anstelle eines Werkstücks auch ein Formwerkzeug verwendet werden, wobei dann nachfolgend direkt auf die Formwerkzeugfläche ausgebracht wird.

Die Ausbringvorrichtung 10 umfasst bei dem konkreten Ausführungsbeispiel eine Faserbandzuführvorrichtung mit einem Vorratsbehälter 18, in dem ein Faserband 20 - beispielsweise in aufgerollter Form - auf einer Rolle enthalten ist. Der Vorratsbehälter 18 kann überdies noch zusätzlich eine Faserbandvorschubvorrichtung (vorliegend nicht dargestellt) enthalten. Eine solche ist in jedem Fall noch separat mit der Bezugsziffer 16 dargestellt. Die Faserbandvorschubvorrichtung fördert das Faserband 20 aus dem Vorratsbehälter 18 in einen Führungsschacht 14, der im Wesentlichen die Querschnittsform des Faserbandes 20 besitzt. Der Führungsschacht 14 endet werkstück- oder -zeugnah in einem schlitzartigen Auslass, aus dem das Faserband 20 in Endlosform austritt. Zur Unterstützung des Vorschubs, der Förderung des Faserbandes in dem Führungsschacht 14 und zum Sauberhalten des Führungsschachtes 14 kann Förderluft 24 durch den Führungsschacht 14 geblasen werden.

Im Laufe des Führungsschachtes 14 ist ein Schneidwerk 22 angeordnet, das zur Durchtrennung des Faserbandes 20 ausgebildet ist.

Am Schneidwerk 22 ist vorliegend ein Mischkopf 26 befestigt, der ein Polyurethanreaktionsgemisch aus Isocyanat und Polyol in einer Mischkammer herstellt und dieses Reaktionsgemisch über eine Sprühdüse in Form eines Sprühkegels 28 ausbringt. Der Sprühkegel besitzt dabei eine Breite, die im Wesentlichen der Breite des Faserbandes 20 entspricht. In Produktionsrichtung nachfolgend ist eine - an sich nicht unbedingt notwendige - Luftblasvorrichtung 30 angeordnet, mit der ein Luftstrahl 32 auf das Faserband 20 gerichtet werden kann. Mittels dieses Luftstrahls 32 kann das Faserband, wie später noch beschrieben wird, in die erste Kunststoffschicht gedrückt und damit fixiert werden.

Bei der vorliegenden Ausführungsform ist noch ein zweiter Mischkopf mit einer Sprühvorrichtung 34 vorgesehen, der in Beschichtungsrichtung dem Führungsschacht 14 vorgeschaltet ist. Auch dieser zweite Mischkopf 34, der im wesentlichen dem ersten Mischkopf 26 entsprechen kann, erzeugt einen Sprühstrahl, dessen Sprühstrahlbreite im Wesentlichen der Breite des Faserbandes entspricht.

Die Arbeitsweise der vorgenannt beschriebenen Ausbringvorrichtung ist nun wie folgt:
Die Ausbringvorrichtung 10 startet an einem Eckpunkt des Werkstückes 12 und fährt entlang einer vorgegebenen Bahn bis zu dessen Ende. Dabei bringt der zweite Mischkopf 34 zunächst eine erste Kunststoffschicht, beispielsweise eine Sperrschicht auf das Werkstück 12 auf. Nachfolgend wird aus dem Führungsschacht 14 das Faserband 20 in das noch nasse Materialgemisch abgelegt und wiederum anschließend eine zweite Kunststoffschicht mittels des ersten Mischkopfes 26 aufgebracht. Um beispielsweise den Beginn des Faserbandanfangs zu fixieren, kann mittels der Luftblasvorrichtung 30 ein kurzer Luftstrom 32 auf das Faserband gegeben werden, um dieses in die erste Kunststoffschicht zu drücken und so ein Mitziehen des Faserbandes zu verhindern.

Hat die Ausbringvorrichtung 10 ein Ende des Werkstücks 12 erreicht, so wird rechtzeitig das Faserband 20 mit dem Schneidwerk 22 abgeschnitten und die Ausbringung über die jeweiligen Mischköpfe 26 und 34 gestoppt. Anschließend wird die Vorrichtung um 180° gedreht und auf einer zur ersten Spur benachbarten Spur zurück verfahren. So kann das Werkzeug spurweise vollflächig beschichtet werden, und zwar jeweils mit einer ersten Kunststoffschicht, einer Faserbandschicht sowie einer weiteren Kunststoffschicht, so dass man ein gewünschtes Compositbauteil erzeugen kann.

Ist es abschnittsweise nicht notwendig, eine Verstärkung mittels des Faserbands einzubringen, so kann das Faserband 20 auch während der Beschichtung mit dem Schneidwerk 22 durchtrennt werden und erst eine Distanz später wieder mit der Ablage und der Förderung weiter verfahren werden.

Zudem ist es, wie weiter oben beschrieben, auch möglich, bei der Verwendung eines langsam aushärtenden Reaktionsgemisches auf den zweiten Mischkopf 34 zu verzichten. In diesem Fall wird zunächst ohne Betrieb der Faserbandzuführvorrichtung mit dem ersten Mischkopf 26 und der entsprechenden Bewegung über das Werkstück verfahren, um eine erste Kunststoffschicht zu erzeugen. Anschließend kehrt die Ausbringvorrichtung wieder zu ihrem Ausgangspunkt zurück, und nunmehr wird die Ausbringvorrichtung unter Betrieb der Faserbandzuführvorrichtung betrieben, das Faserband 20 auf die zuvor aufgebrachte Kunststoffschicht gelegt und anschließend mit der zweiten Schicht beschichtet.

Wesentlich bei der Beschichtung ist natürlich, dass der Vorschub des Faserbandes über die Vorschubeinrichtung 16 mit der Bewegungsgeschwindigkeit der Bewegungsvorrichtung (Robotarm) übereinstimmt.

Mit der vorliegenden Erfindung ist es auf einfache Weise möglich, ein Compositbauteil mit guten mechanischen Eigenschaften herzustellen, ohne dass zu große negative Auswirkungen aufgrund eines Faserfluges zu erwarten sind. Die Vorrichtung lässt sich überdies schnell und einfach betreiben und ist hinsichtlich ihres Einsatzgebietes sehr flexibel.

### Bezugszeichenliste

- 10: Ausbringvorrichtung
- 12: Werkzeug oder Werkstück
- 14: Führungsschacht
- 16: Vorschubvorrichtung
- 18: Vorratsbehälter
- 20: Faserband
- 22: Schneidwerk
- 24: Luftstrom
- 26: Mischkopf mit Sprühvorrichtung
- 28: Sprühstrahl
- 30: Luftblasvorrichtung
- 32: Luftstrom
- 34: Zweiter Mischkopf mit Sprühvorrichtung

## Patentansprüche

1. Vorrichtung zum Herstellen eines Compositbauteils aus einem beschichteten Faserverstärkungsmaterial umfassend
- - eine Bewegungsvorrichtung, an der
- - eine Faserbandzuführvorrichtung mit
- - einen Vorratsbehälter (18) für ein kontinuierliches Faserband (20),
- - einem Faserbandvorschub (16),
- - eine Faserbandführungseinrichtung (14) mit einem Auslass und
- - einem Faserbandschneidwerk (22) sowie
- zumindest eine Aufbringeinrichtung 26 für ein Kunststoffmaterial angeordnet sind,
wobei die Aufbringeinrichtung nachfolgend der Faserbandzuführvorrichtung angeordnet ist, derart, dass nachfolgend dem Auflegen des Faserbandes auf ein Werkzeug oder ein Werkstück mit der Aufbringeinrichtung das Kunststoffmaterial aufgetragen wird, wobei die Ausbringbreite im wesentlichen der Breite des Faserbandes (20) entspricht.

2. Vorrichtung nach Anspruch 1, wobei die zumindest eine Aufbringeinrichtung ein Polyurethanmischkopf (26) mit einer Sprühvorrichtung ist.

3. Vorrichtung nach Anspruch 1 oder 2, wobei die Bewegungsvorrichtung als Robotarm ausgebildet ist, der über ein Werkzeug oder ein Werkstück (12) entlang eines vorgegebenen Weges verfahrbar ist.

4. Vorrichtung nach einem der vorhergehenden Ansprüche, wobei in Bewegungsrichtung vor dem Auslass der Faserbandführungsvorrichtung (14) eine weitere Aufbringeinrichtung (34) für ein Kunststoffmaterial vorgesehen ist, die in Beschichtungsrichtung gesehen vor dem Auslass der Faserbandführungseinrichtung (14) angeordnet ist.

5. Vorrichtung nach Anspruch 4, wobei die zweite Aufbringeinrichtung ebenfalls als Polyurethanmischkopf (34) mit einer Sprühvorrichtung ausgebildet ist.

6. Vorrichtung nach einem der vorhergehenden Ansprüche, wobei die Faserzuführvorrichtung sowie die Aufbringeinrichtungen (26, 34) derart ausgebildet sind, dass ein Faserband (20) mit einem Flächengewicht von bis zu 1000 g/m² verarbeitbar ist.

7. Vorrichtung nach einem der vorhergehenden Ansprüche, wobei die Faserzuführvorrichtung sowie die Aufbringeinrichtungen (26, 34) derart ausgebildet sind, dass ein Faserband mit einer Breite von bis zu 1500 mm verarbeitbar ist.

8. Verfahren zum Betrieb einer Vorrichtung gemäß der Ansprüche 1 bis 7, bei dem
- zunächst eine erste Kunststoffschicht auf ein Werkzeug oder ein Werkstück aufgebracht wird,
- nachfolgend ein kontinuierliches Faserband in Form einer Fasermatte auf die erste Kunststoffschicht aufgebracht wird,
- nachfolgend eine zweite Kunststoffschicht auf das kontinuierliche Faserband aufgebracht wird,
wobei das kontinuierliche Faserband zumindest am Ende des Werkzeugs oder des Werkstücks mittels einer Schneidvorrichtung durchtrennt wird.

9. Verfahren nach Anspruch 8, wobei die Verfahrensschritte des Aufbringens der ersten Kunststoffschicht, des Endlos-Faserbandes sowie der zweiten Kunststoffschicht in einem Arbeitsschritt erfolgen.
